Europäisches Patentamt

European Patent Office

Office européen des brevets

(19)

(11) Numéro de publication : **0 278 812 B1**

# FASCICULE DE BREVET EUROPEEN

(12)

(45) Date de publication du fascicule du brevet :
**17.04.91 Bulletin 91/16**

(51) Int. Cl.⁵ : **F16H 55/08, F16H 1/06**

(21) Numéro de dépôt : **88400104.1**

(22) Date de dépôt : **19.01.88**

(54) **Dispositif de transmission de mouvement par un engrenage extérieur.**

(30) Priorité : **20.01.87 FR 8700558**

(43) Date de publication de la demande :
**17.08.88 Bulletin 88/33**

(45) Mention de la délivrance du brevet :
**17.04.91 Bulletin 91/16**

(84) Etats contractants désignés :
**BE DE ES GB IT NL SE**

(56) Documents cités :
**EP-A- 0 200 614
DE-C- 131 392
FR-A- 1 003 618**

(56) Documents cités :
**THE ENGINEER, vol. 135, 22 juin 1923, page
660, Morgan-Grampian LTD., Londres, GB;
"Letters to the editor", F.E. LINDSAY: "An
interesting gear"**

(73) Titulaire : **REGIE NATIONALE DES USINES
RENAULT
Boîte postale 103 8-10 avenue Emile Zola
F-92109 Boulogne-Billancourt (FR)**

(72) Inventeur : **Mercier, Jacques
62, avenue de Suffren
F-75015 Paris (FR)**

(74) Mandataire : **Chassagnon, Jean Alain et al
8/10, avenue Emile Zola
F-92109 Boulogne-Billancourt (FR)**

EP 0 278 812 B1

## Description

La présente invention concerne un organe de transmission reliant deux arbres parallèles tournant dans le même sens d'une manière continue et réversible, capable d'une forte capacité de couple et de vitesse, et parfaitement homocinétique.

Actuellement, on utilise, pour ce faire, de façon connue, des courroies plates ou trapézoïdales, crantées ou non, ou des chaînes, ces organes coopérant avec des poulies spécialement aménagées.

Ces transmissions, outre leur encombrement, présentent l'inconvénient d'un fonctionnement généralement bruyant, limité en couple et en vitesse, d'un coût souvent élevé lorsqu'on veut une endurance satisfaisante. Enfin, elles ne sont par parfaitement homocinétiques. Dans la revue "The Engineer" (27.6.1923) F.E. LINDSAY décrit un engrenage extérieur à une seule dent, où les pignons sont identiques et tournent dans le même sens de façon homocinétique. Ce type d'engrenage présente l'inconvénient d'être non-réversible.

L'objet de l'invention est de répondre à ces critiques par la création d'un organe nouveau : un engrenage extérieur dont chacun des pignons tourne dans le même sens, tout en permettant une réversibilité parfaite.

A cet effet, l'invention propose un dispositif de transmission de mouvement entre deux arbres parallèles reliés par un engrenage extérieur, selon la revendication 1.

Le dispositif de transmission de mouvement selon l'invention permet d'obtenir un fonctionnement très silencieux pouvant absorber un couple relativement important tout en ayant une tenue dans le temps correcte.

D'autres caractéristiques et avantages de la présente invention ressortiront de la description qui suit le mode de réalisation donné à titre d'exemple en référence aux dessins annexés sur lesquels :
- la figure 1 est une vue en perspective d'un pignon selon l'invention ;
- la figure 2 est une section par un plan perpendiculaire à l'axe du pignon de la figure 1 ;
- la figure 3A est une vue suivant X-X de la figure 1 ;
- la figure 3B est une vue suivant Y-Y de la figure 1 ;
- la figure 4 est une vue en perspective d'un engrenage correspondant à la figure 1 ;
- la figure 5 est une section par un plan perpendiculaire aux axes de l'engrenage de la figure 4 ;
- la figure 6 est une vue suivant VI de la figure 5.

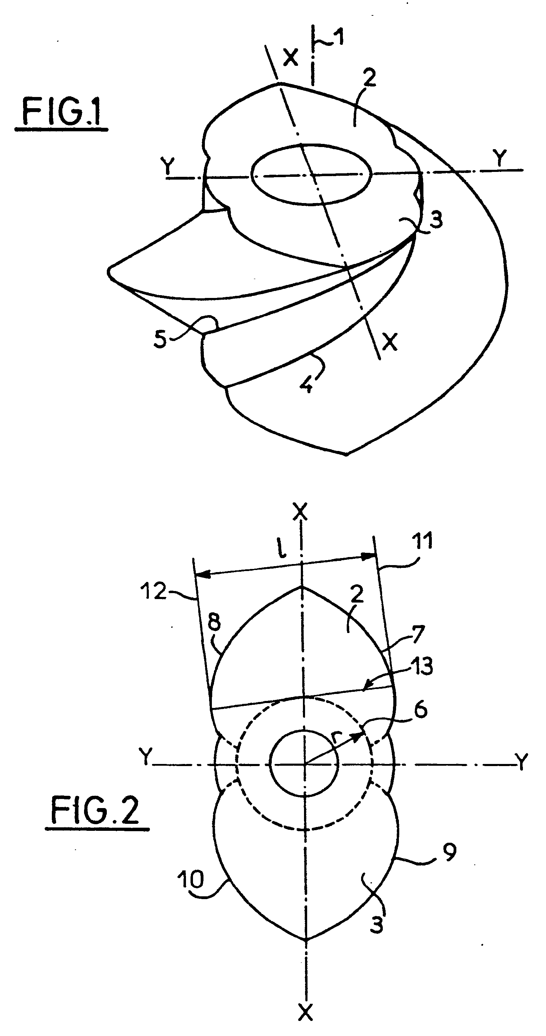

La figure 1 montre une vue en perspective d'un pignon d'axe 1 à deux dents 2 et 3 opposées axialement et identiques, disposées longitudinalement suivant deux hélices 4 et 5, chacune sur un demi-tour.

La figure 2 est une section par un plan perpendiculaire de l'axe 1 montrant le cercle de base 6 de rayon r et les profils en développante de cercle 7 et 8 de la dent 2, 9 et 10 de la dent 3, respectivement symétriques par rapport à l'axe XX. Chaque dent à la largeur 1 constante définie par la distance entre deux tangentes, parallèles 11 et 12 aux profils 7 et 8, ces tangentes étant perpendiculaires à une tangente 13 au cercle de la base 6. Dans le plan de coupe, la dent 3 est symétrique de la dent 2 par rapport à l'axe YY perpendiculaire à l'axe XX.

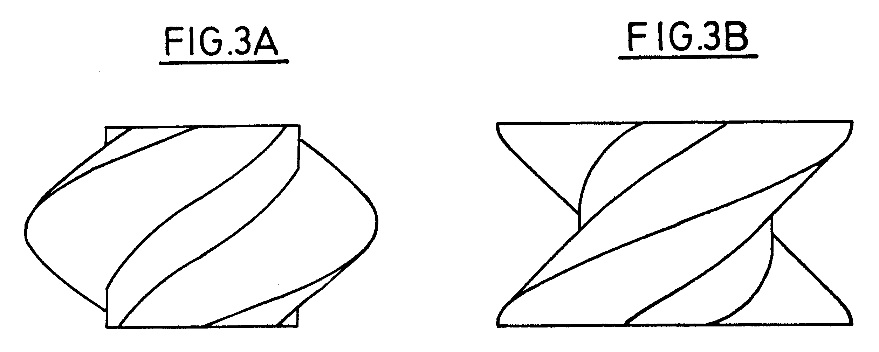

Les figures 3A et 3B montrent le pignon d'axe 1 en élévation vu selon la direction XX et selon la direction YY.

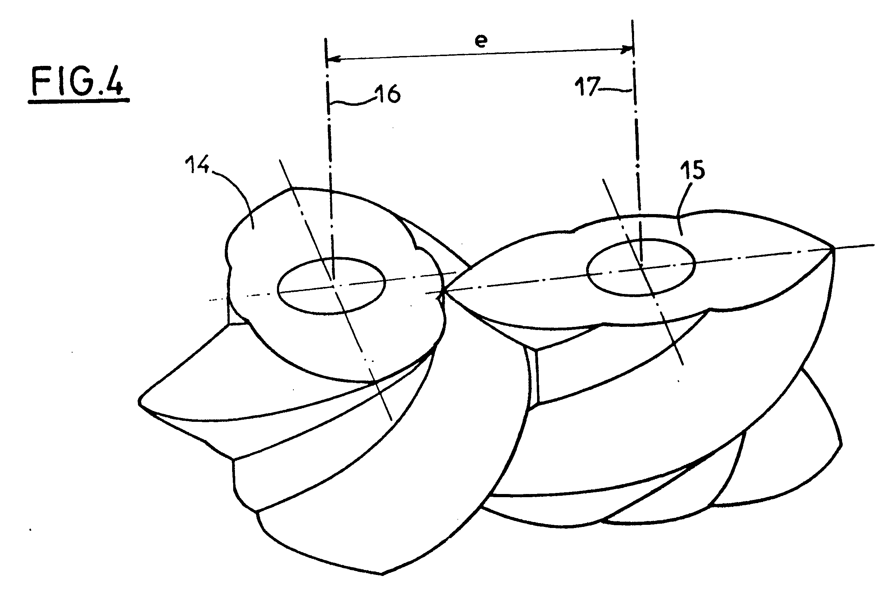

La figure 4 est une vue en perspective d'un engrenage à deux pignons identiques 14 et 15 tournant respectivement autour des axes parallèles 16 et 17, ces axes étant distants de l'entraxe e.

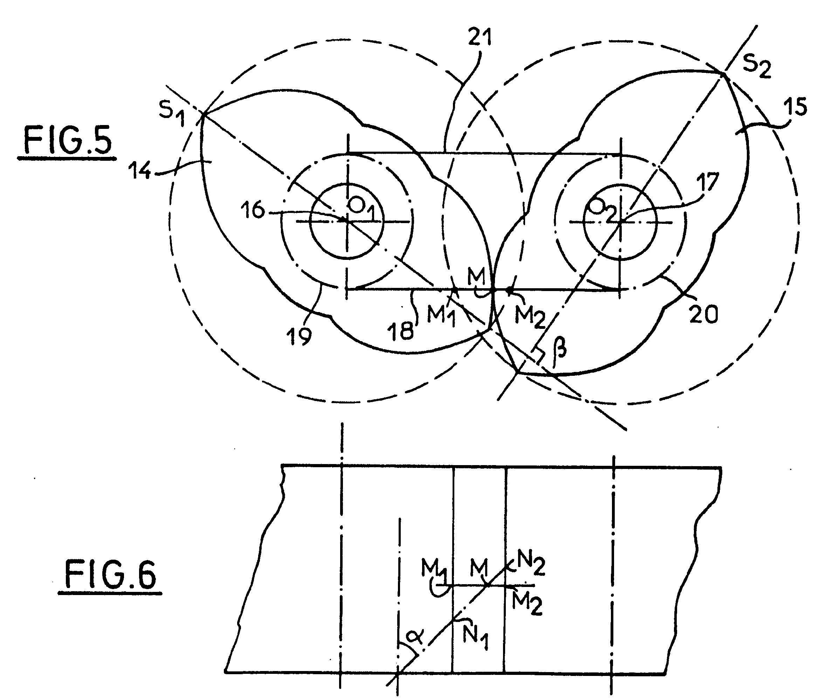

La figure 5 est une section par un plan perpendiculaire aux axes 16 et 17 montrant les profils conjugués des flancs respectivement gauche et droit des dents en position d'engrènement. Les axes $O_1S_1$ et $O_2S_2$ des dents font entre eux l'angle $\beta = \pi/2$. Le contact a lieu en un point M situé sur la tangente commune extérieure 18 aux deux cercles de base égaux 19 et 20. Ce contact se situe entre les points $M_1$ et $M_2$, qui sont les intersections de la tangente commune 18 avec les cercles $O_1S_1$ et $O_2S_2$ passant par les sommets des dents.

La figure 6 montre l'engrènement pour la position précédente dans le plan tangent extérieur aux deux cylindres de base, ce plan tangent correspondant à la tangente commune 18. Le contact est linéaire et incliné suivant l'angle $\alpha$ qui est l'angle de l'hélice de base. Ce contact est compris entre les points $N_1$ et $N_2$ situés sur les parallèles aux axes passant par les points $M_1$ et $M_2$. La condition $\beta = \pi/2$ assure le contact simultané des autres flancs, respectivement droit et gauche, dans le deuxième plan tangent extérieur aux deux cylindres de base, ce plan tangent correspondant à la tangente commune 21.

Cette description, donnée à titre d'exemple, n'exclut pas la possibilité d'un nombre quelconque de dents, ni de la non-identité des deux pignons, non-identité résultant des corrections de denture habituelles utilisées pour les profils en développante de cercle.

Il résulte de la description précédente les points suivants qui sont caractéristiques de l'invention :
- En première caractéristique, l'engrenage, objet d'un mode de réalisation de l'invention et décrit sur les figures, se compose de deux pignons identiques (deux fois la même pièce) ayant chacun n dents à profil à développante de cercle dans un plan perpendiculaire à son axe. Les dents sont disposées longitudinalement en hélice sur approximativement au moins $1/n$ tour.

– En deuxième caractéristique, les pignons peuvent recevoir des corrections de denture.

– En troisième caractéristique, les hélices des deux pignons sont de même sens.

– En quatrième caractéristique, l'engrenage est parfaitement homocinétique, il n'y a pas de variation du rapport de transmission en fonctionnement et quel que soit l'entraxe même si celui-ci est différent de l'entraxe théorique.

– En cinquième caractéristique, les axes de symétrie des dents en contact dans un plan perpendiculaire aux axes de rotation font en fonctionnement un angle $\beta$ constant, fonction du nombre de dents et tel que

$$\beta = \pi \cdot \frac{n-1}{n}$$

– En sixième caractéristique, la largeur 1 d'une dent est reliée à l'entraxe 2 et au rayon r des cercles de base par la relation : $1 = e - \pi \cdot \dfrac{n-1}{n} \cdot r$.

– En septième caractéristique, le rapport de l'entraxe e au rayon r du cercle de base est fonction du nombre de dents n. On doit avoir $\dfrac{e}{2r} > \mathrm{tg}\ \beta/2$, l'angle $\beta$ étant celui précédemment défini par $\beta = \pi \cdot \dfrac{n-1}{n}$.

– En huitième caractéristique, l'engrènement a lieu pour des flancs conjugés dans une position donnée selon une portion de droite située dans le plan tangent extérieur aux deux cylindres de base et inclinée suivant l'angle $\alpha$ de l'hélice de base.

– En neuvième caractéristique, la longueur de conduite par le profil est définie par la relation : $\mathrm{tg}\ (\dfrac{c}{2r} + \pi \cdot \dfrac{n-1}{2n} = \dfrac{e}{2r} + \dfrac{c}{2r}$, c étant cette longueur de conduite.

– En dixième caractéristique, la forme massive des dents évite la troncature des sommets de dents, ce qui permet d'avoir la conduite maximale par le profil.

– En onzième caractéristique, le taillage, la finition et le contrôle de ces engrenages relèvent des mêmes techniques que celles utilisées pour les engrenages classiques à développante de cercle (en particulier taillage par fraise-mère).

L'invention couvre également, outre l'engrenage lui-même, toutes applications utilisant une ou plusieurs des caractéristiques de l'engrenage, puis seul ou en combinaison avec des engrenages classiques dans quelque domaine que ce soit.

## Revendications

1. Dispositif de transmission de mouvement entre deux arbres parallèles d'axe de rotation (16) et (17) reliées par un engrenage extérieur, où le pignon (14) et le pignon (15) dudit engrenage extérieur sont hélicoïdaux avec une hélice ayant le même angle et le même sens, de manière que le pignon (14) et le pignon (15) tournent dans le même sens de façon parfaitement homocinétique (constance du rapport des vitesses), caractérisé en que ledit engrenage est réversible et que les pignons (14) et (15) sont identiques, c'est-à-dire qu'ils ont le même nombre de dents (n) et en ce en ce que les axes de symétrie ($O_1S_1$, $O_2S_2$), des dents (2, 3) en contact dans un plan perpendiculaire aux axes de rotation (16) et (17) font en fonctionnement un angle $\beta$ constant tel que $\beta = \pi \cdot \dfrac{n-1}{n}$.

2. Dispositif de transmission selon la revendication 1, caractérisé en ce que le profil des dents (2, 3) dans un plan perpendiculaire à l'axe est une développante de cercle.

3. Dispositif de transmission selon la revendication 1, caractérisé en ce que chaque dent (2, 3) est sur une hélice (4, 5) d'une longueur d'au moins 1/n tour.

4. Dispositif de transmission selon la revendication 1, caractérisé en ce que les dents (2, 3), d'au moins un pignon (14, 15), ont une correction de denture.

5. Dispositif de transmission selon la revendication 1, caractérisé en ce que la largeur I d'une dent (2, 3) est reliée à l'entraxe e et au rayon r des cercles de base (19) et (20) par la relation :

$$I = e - \pi \cdot \frac{n-1}{n} \cdot r$$

6. Dispositif de transmission selon la revendication 1, caractérisé en ce que l'entraxe e et le rayon r des cercles de base (19) et (20) est dans un rapport tel que :

$$\frac{e}{2r} > tg\ \beta/2$$

7. Dispositif de transmission selon la revendication 1, caractérisé en ce que l'engrènement a lieu pour des flancs conjugués, dans une position donnée, selon une portion de droite située dans le plan tangent extérieur aux deux cylindres de base, et inclinée suivant l'angle α de l'hélice de base.

8. Dispositif de transmission selon la revendication 1, caractérisée en ce que la longueur de conduite c par le profil est définie par la relation :

$$tg\left(\frac{c}{2r} + \pi \cdot \frac{n-1}{2n}\right) = \frac{e}{2r} + \frac{c}{2r}$$

**Ansprüche**

1. Bewegungsübertragungsvorrichtung zwischen zwei parallelen Drehachsen (16 und 17), die durch eine Außenverzahnung miteinander verbunden sind, wobei ein Ritzel (14) und ein Ritzel (15) der Außenverzahnung spiralverzahnt sind und die Spiralwindungen den gleichen Winkel und die gleiche Richtung derart aufweisen, daß das Ritzel (14) und das Ritzel (15) sich in der gleichen Richtung, und zwar perfekt homokinetisch drenen (konstantes Geschwindigkeitsverhältnis), dadurch gekennzeichnnet, daß die Außenverzahnung reversibel ist, daß die Ritzel (14 und 15) die gleiche Anzahl Zähne (n) aufweisen und daß die Symmetrieachsen ($O_1S_1$, $O_2S_2$) der Zähne (2, 3) bei Berührung in einer senkrechten Ebene zu den Drehachsen (16 und 17) während des Betriebes einen konstanten Winkel β bilden, wobei $\beta = \pi\frac{n-1}{n}$ ist.

2. Übertragungsvorrichtung nach Anspruch 1, dadurch gekennzeichnet, daß das Profil der Zähne (2, 3) in einer Ebene senkrecht zur Achse eine Kreiserzeugende ist.

3. Übertragungsvarrichtung nach Anspruch 1, dadurch gekennzeichnet, daß jeder Zahn (2, 3) auf einer Spiralwindung (4, 5) mit einer Länge von wenigsten 1/n Umdrehungen liegt.

4. Übertragungsvorrichtung nach Anspruch 1, dadurch gekennzeichnet, daß die Zähne (2, 3) wenigstens eines Ritzels (14, 15) eine Zahnungsabweichung aufweisen.

5. Übertragungsvorrichtung nach Anspruch 1, dadurch gekennzeichnet, daß die Breite (1) eines Zahnes (2, 3) mit dem Achsabstand (d) und mit dem Radius (r) der Grundkreise (19 und 20) zusammenhängt durch die Beziehung.

$$1 = e - \pi \cdot \frac{n-1}{n} \cdot r$$

6. Übertragungsvorrichtung nach Anspruch 1, dadurch gekennzeichnet, daß der Achsabstand (e) und der Radius (r) Ger Grundkreise (19 und 20) in einem derartigen Verhältnis stehen, daß die folgende Beziehung erfüllt ist

$$\frac{e}{2r} > r_g \, \beta/2$$

7. Übertragungsvorrichtung nach Anspruch 1, dadurch gekennzeichnet, daß der Zahneingriff für die gekoppelten Flanken in einer vorgegebenen Stellung erfolgt, gemäß einem geraden Abschnitt, welcher in einer Tangentialebene liegt, außen an die beiden Grundzylinder und der gemäß einem Winkel $\alpha$ zur Grundspiralwindung geneigt ist.

8. Übertragungsvorrichtung nach Anspruch 1, dadurch gekennzeichnet, daß die Führungslänge (c) pro Profil gegeben ist durch die folgende Beziehung

$$r_g \left( \frac{c}{2r} + \pi \, \frac{n-1}{2n} \right) = \frac{e}{2r} + \frac{c}{2r}$$

## Claims

1. Arrangement for the transmision of motion between two parallel shafts with axes of rotation (16) and (17) which are connected by an external gear arrangement wherein the pinion (14) and the pinion (15) of said external gear arrangement are helical with a helix of the same angle and the same direction in such a way that the pinion (14) and the pinion (15) rotate in the same direction in perfectly homokinetic fashion (constancy in respect of the ratio of the speeds), characterised in that said gear arrangement is reversible and that the pinions (14) and (15) have the same number of teeth (n) and that the axes of symmetry ($O_1S_1$, $O_2S_2$) of the teeth (2, 3) in contact in a plane perpendicular to the axes of rotation (16) and (17) form in operation a constant angle $\beta$ such that $\beta = \pi \cdot \frac{n-1}{n}$.

2. A transmission arrangement according to claim 1 characterised in that the profile of the teeth (2, 3) in a plane perpendicular to the axis is an involute of a circle.

3. A transmission arrangement according to claim 1 characterised in that each tooth (2, 3) over a helix (4, 5) is of a length of at least 1/n revolution.

4. A transmission arrangement according to claim 1 characterised in that the teeth (2, 3) of at least one pinion (14, 15) have a tooth configuration correction.

5. A transmission arrangement according to claim 1 characterised in that the width $\ell$ of a tooth (2, 3) is linked to the spacing e between axes and the radius r of the base circles (19) and (20) by the following relationship :

$$\ell = e - \pi \cdot \frac{n-1}{n} \cdot r$$

6. A transmission arrangement according to claim 1 characterised in that the spacing e between axes and the radius r of the base circles (19) and (20) is in a ratio such that :

$$\frac{e}{2r} > tg \; \beta/2$$

7. A transmission arrangement according to claim 1 characterised in that meshing occurs in respect of conjugate flanks in a given position in accordance with a portion of a straight line disposed in the external tangential plane to the two base cylinders and inclined at the angle $\alpha$ of the base helix.

8. A transmission arrangement according to claim 1 characterised in that the configurational length c of the profile is given by the relationship :

$$tg\left(\frac{c}{2r} + \pi \cdot \frac{n-1}{2n}\right) = \frac{e}{2r} + \frac{c}{2r}$$

FIG.1

FIG.2

7

FIG.3B

FIG.3A

FIG.4

FIG.5

FIG.6